# EUROPEAN PATENT APPLICATION

(11) **EP 3 876 302 A1**
(43) Date of publication of application: **08.09.2021**
(21) Application number: 20161473.2
(22) Date of filing: 06.03.2020
(51) Int. Cl.: H01M 2/10, B60R 13/08, B60L 58/24

(54) **RECHARGEABLE ENERGY STORAGE SYSTEM THERMAL INSULATION**

(71) Applicant: National Electric Vehicle Sweden AB, 461 38 Trollhättan (SE)
(72) Inventor: Zimmer, Claes, 461 55 TROLLHÄTTAN (SE)
(74) Representative: AWA Sweden AB

(57) **Abstract**

The present inventive concept relates to a method for thermally insulating a container with granular insulating material, the method comprising: fluidly connecting an air conveyor system to an inlet opening of the container, feeding granular insulating material into the air conveyor system, reducing the static charge of said granular insulating material such that the granular insulating material, when arranged in the container, has reduced charge of static electricity, and filling the container with granular insulating material such that the container is thermally insulated.

## Description

### TECHNICAL FIELD

The present inventive concept relates to the field of rechargeable energy storage systems and thermal insulation thereof.

### BACKGROUND

Most rechargeable batteries are temperature sensitive and rechargeable energy storage systems (RESS) typically have an optimal working temperature range of approximately 20 to 30 °C. Ideally, the temperature should also be as uniform as possible throughout the system. A deviation in temperature from an optimal working interval results in both worse performance of the RESS, such as decreased driving range due to energy loss, and decrease in longevity of the RESS.

To maximize performance and to increase longevity, electric vehicles (EV) are typically equipped with a battery system that may activate a heating system or a cooling system if the battery temperature deviates significantly under or over the specified optimal temperature range. However, such a system indeed requires energy, and an increased energy consumption translates to decreased driving range. Furthermore, repeated cooling and/or heating of the RESS negatively impacts longevity.

### SUMMARY OF THE INVENTIVE CONCEPT

In view of the above, there is a need for a solution that is not only capable of keeping the temperature in the RESS within an optimal interval, but also further decreases energy losses and increases longevity.

It is an object of the present inventive concept to provide a method for thermally insulating a RESS. A method for removing thermal insulation from the RESS, as well as a system adapted to fill a RESS with insulating material, are also provided herein.

The inventive concept is defined by the appended independent claims, with embodiments being set forth in the dependent claims, in the following description, and in the drawings.

According to a first aspect of the present inventive concept, there is provided a method for thermally insulating a container with granular insulating material, comprising: fluidly connecting an air conveyor system to an inlet opening of the container; feeding granular insulating material into the air conveyor system; reducing the static charge of said granular insulating material such that the granular insulating material, when arranged in the container, has reduced charge of static electricity; and filling the container with granular insulating material such that the container is thermally insulated.

Filling the container is to be understood as filling the container to any degree of filling. It does not require that the container is filled to its absolute maximum capacity or that 100% of the air inside the container is replaced with insulating material. Filling the container with granular insulating material may therefore, e.g., be filling the container to at least 10%, 30% or 50% of the capacity of the container.

That two components are fluidly connected to each other is to be understood as fluid being able to flow from one component to the other, or between two components, without the components needing to be directly adjacent to each other. For instance, the components can be connected by means of tubes or pipes.

In the context of this application, granular when written together with granular insulating material means that the material is composed of relatively small, discrete objects and not a continuous mass. The granularity may be coarser or finer, e.g. discrete objects having a maximum cross-sectional distance of 50 mm, 40 mm, 30 mm, 20 mm, 10 mm, 5 mm or even 1 mm. The discrete object may be of any geometrical form. The granular insulating material does not have to be composed of uniform discrete objects, but may rather be composed of discrete objects of varying size, type of material, dimension, weight etc.

The present inventive concept is at least partly based on the understanding that an improved insulation method may keep the temperature in the container in an optimal range and reduce the additional energy required to heat up the container in case of low ambient temperature (and conversely reduce the additional energy required to cool down the container in case of high ambient temperature). The filling of the container may be greatly improved by reducing or eliminating any charge of static electricity present on the insulating material, in turn rendering the insulation more effective. By reducing the static electricity of the granular insulating material, the material is less prone to stick to surfaces, or the discrete units that make up the material are less prone to stick to each other, thereby improving e.g. both material flow and distribution of material when arranged inside the container.

An inlet opening is to be understood as an opening through which air, sometimes together with insulating material, enters the container.

In some embodiments, the air conveyor system is fluidly connected to an outlet opening of the container.

An outlet opening is to be understood as an opening through which air, sometimes together with insulating material, exits the container.

By having the air conveyor system fluidly connected to both an inlet opening and an outlet opening of the container, an improved flow of air throughout the container may be achieved. An improved flow of air entails an improved distribution of granular insulating material.

In some embodiments, the granular insulating material is selected from a group of materials comprising: Expanded Polystyrene (EPS) and Expanded Polylactic Acid (E-PLA).

In some embodiments, vibrations are induced in the container, so that the distribution of granular insulation material is facilitated. In some embodiments, inducing vibrations is carried out by means of a pneumatic vibrator, an electric vibrator, or a ball vibrator.

The use of vibrators or oscillation exciters may enable a more compact filling, thereby increasing the fill grade and increasing the insulation capability. The time needed to achieve the desired level of filling may also be reduced.

In some embodiments, reducing the static charge of said granular insulating material comprises moving said granular insulating material through an ionizing device fluidly connected to said air conveyor system and container.

In some embodiments, the ionizing device is arranged such that the granular insulating material, when moving through the ionizing device, moves in a substantially vertical direction.

Arranging the ionizing device such that the granular insulating material flows, inside the ionizing device, in a substantially vertical direction may ensure an even distribution of granular insulating material in the flow. A substantially vertical flow direction may thus avoid any potentially detrimental effect of gravity on the reduction or elimination of static charge compared to having a horizontal flow or a flow at an angle other than 90° from the horizontal.

According to a second aspect of the present inventive concept, there is provided a method for removing granular insulating material from a container, comprising: fluidly connecting the air conveyor system to an outlet opening of the container; fluidly connecting the air conveyor system to a means for receiving the granular insulating material; removing the granular insulating material from the container; and reducing the static charge of said granular insulating material by moving the granular insulating material through an ionizing device fluidly connected to said air conveyor system and means for receiving the granular insulating material.

This aspect may exhibit the same or similar features and technical effects as the first aspect and vice versa. This aspect may thus exhibit the same technical benefits as the first aspect. It should be noted that the methods of the first and second aspects may be interrelated: the first aspect defines the inventive concept in terms of filling a container with granular insulating material, whereas the second aspect defines the inventive concept in terms of removing granular insulating material from the container.

By reducing the static charge of the insulating material while emptying the material from the container an easier emptying is facilitated, since a lower static charge implies that the insulating material will be less prone to e.g. stick to surfaces in the air conveyor system.

In some embodiments, the air conveyor system is fluidly connected to an inlet opening of the container.

According to a third aspect of the present inventive concept, there is provided a system adapted to fill a container with granular insulating material, comprising: a container; an air conveyor system fluidly connected to an inlet opening of the container; an ionizing device fluidly connected downstream from a feeding area of the air conveyor system and fluidly connected upstream from said inlet opening of the container.

This aspect may exhibit the same or similar features and technical effects as the first and/or second aspect, and vice versa.

In some embodiments, an outlet opening of the container is fluidly connected to the air conveyor system, the outlet opening of the container being downstream from said inlet opening of the container

According to a fourth aspect of the inventive concept, there is provided a rechargeable energy storage system (RESS), thermally insulated using any of the methods according to the first aspect of the present inventive concept.

By providing a rechargeable energy storage system (RESS) that is thermally insulated according to the first aspect of the present inventive concept, a more durable with increased longevity is provided. By providing better durability and increased longevity, the power consumption of the RESS is decrease as well as the number of times the RESS has to be exchanged when used e.g. in an electrical vehicle. Therefore, a RESS according to the present inventive concept is more cost efficient.

### BRIEF DESCRIPTION OF THE DRAWINGS

The inventive concept, some non-limiting embodiments, and further advantages of the inventive concept will now be described with references to the drawings, in which:
- Fig. 1: is a schematic illustration of one embodiment of a system adapted to fill a container with granular insulating material.
- Fig. 2: is a perspective drawing illustrating parts of an embodiment of a system adapted to fill a container with granular insulating material.
- Fig. 3: is a schematic illustration of one embodiment of a system adapted to remove granular insulating material from a container.
- Fig. 4: is a perspective drawing illustrating parts of an embodiment of a system adapted to remove granular insulating material from a container.
- Fig. 5: is a flow diagram illustrating the method of thermally insulating a container.
- Fig. 6: is a flow diagram illustrating the method of removing granular insulating material from a container.

### DETAILED DESCRIPTION OF PREFERRED EMBODIMENTS

In the following detailed description, some embodiments of the present inventive concept will be described. However, it is to be understood that features of the different embodiments are exchangeable between the embodiments and may be combined in different ways, unless anything is specifically indicated. Even though in the following description, numerous details are set forth to provide a more thorough understanding of the present inventive concept, it will be apparent to one skilled in the art that the present inventive concept may be practiced without these details. In other instances, well known constructions or functions are not described in detail, so as not to obscure the present inventive concept.

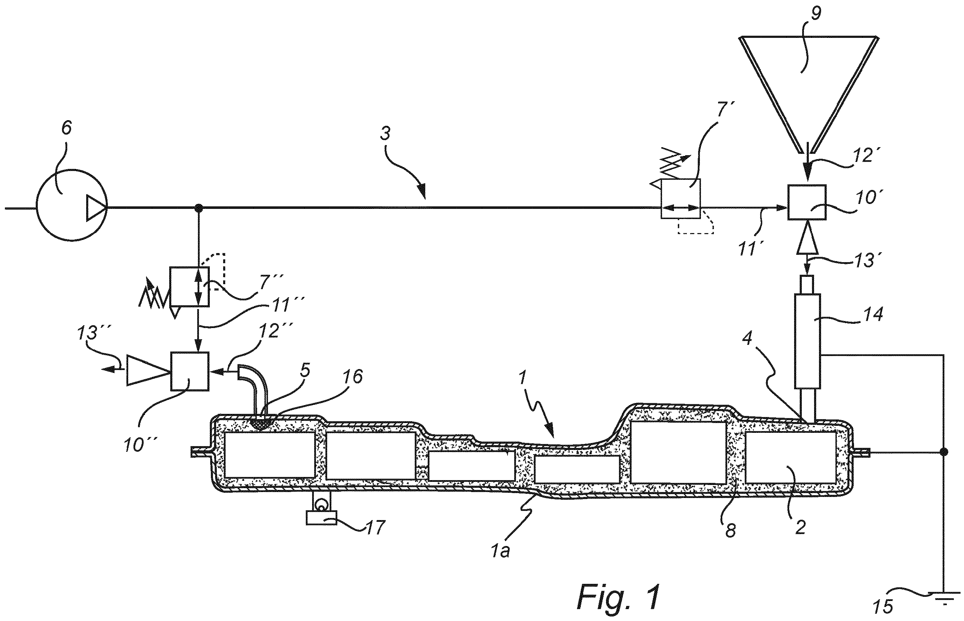

Fig. 1 is a schematic illustration of one embodiment of a system adapted to fill a container with granular insulation material. In this exemplary embodiment, the container is a rechargeable energy storage system (RESS) 1 for an electric or hybrid electric vehicle. The rechargeable energy storage system 1 comprises one or more battery cells 2. The one or more battery cells 2 are housed within an outer casing 1a. An air conveyor system 3 is fluidly connected to an inlet 4 and an outlet 5 opening of the rechargeable energy storage system 1.

Pressurized air is provided to the air conveyor system 3 by means of an air compressor 6. The air conveyor system 3 is connected to the rechargeable energy storage system 1 in such a way that granular insulating material 8 can be introduced to the air conveyor system 3 by means of a feed system 9. In some embodiments, the feed system 9 may comprise a hopper, as illustrated in fig. 1. In other embodiments, the granular insulating material 8 may be stored in a silo (not shown) and/or introduced into the system 3 through another part of the air conveyor system 3. The granular insulating material 8 may be fed into the system 3 by any other appropriate means, including but not limited to for example a feed screw, vibration device or feeding transportation band. The granular insulating material 8 can be beads of Expanded Polystyrene or Expanded Polylactic Acid. The granular insulating material 8 may have a substantially spherical shape. It may take the shape of pellets or any other shape provided that a suitable filling grade can be achieved. In Fig. 1, the granular insulating material 8 is shown arranged inside the rechargeable energy storage system 1.

The conveyor system 3 is arranged such that a flow is created in the direction going, inside the rechargeable energy storage system 1, from the inlet opening 4 of the rechargeable energy storage system 1 to the outlet opening 5 of the rechargeable energy storage system 1. The direction of the flow in different parts of the air conveyor system 3 is determined by the use of a first and a second ejector 10', 10".

The ejectors 10', 10" are arranged in the air conveyor system 3 such that compressed air provided by the compressor 6 acts as a motive fluid in the ejector 10', 10". For instance, for the first ejector 10', the compressor 6 is fluidly connected to the motive line 11'. Granular insulating material 8 is fed through the feed system 9 into the suction line 12' of the first ejector 10' and is subsequently discharged through the ejector's 10' discharge line 13' into the air conveyor system 3, downstream of the first ejector 10'. The discharge line 13' is thus here connected to a feeding area of the air conveyor system 3. The motive line 11" of the second ejector 10" is fluidly connected to the compressor 6 and its suction line 12" is fluidly connected to the outlet opening 5 of the rechargeable energy storage system 1. The outlet opening 5 of the rechargeable energy storage system 1 is fitted with a wire mesh suction strainer 16, in order to prevent the granular insulating material 8 from exiting the rechargeable energy storage system 1 during filling. Any suitable strainer or filter may be fitted to the outlet opening 5 of the rechargeable energy storage system to achieve this purpose.

Where necessary, the pressure in some or all parts of the air conveyor system 3 is regulated by one or more pressure regulators 7', 7". For instance, a pressure regulator 7' can set the pressure of the air supplied to the motive line 11' of one ejector 10' to 1.5 bar and another pressure regulator 7" can set the pressure of the air supplied to the motive line 11" of another ejector 10" to 4 bar.

An ionizing device 14 is connected downstream from the feed system 9 and upstream from the inlet opening 4 of the rechargeable energy storage system 1. The ionizing device 14 is arranged such that the granular insulating material 8, when moving through the ionizing device 14, moves in a substantially vertical direction. The ionizing device 14 enables any charge of static electricity present on the granular insulating material 8 that is being passed through the ionizing device 14 to be reduced or eliminated prior to filling the rechargeable energy storage system 1 with granular insulating material 8. The ionizing device 14 and the rechargeable energy storage system 1 are both grounded 15.

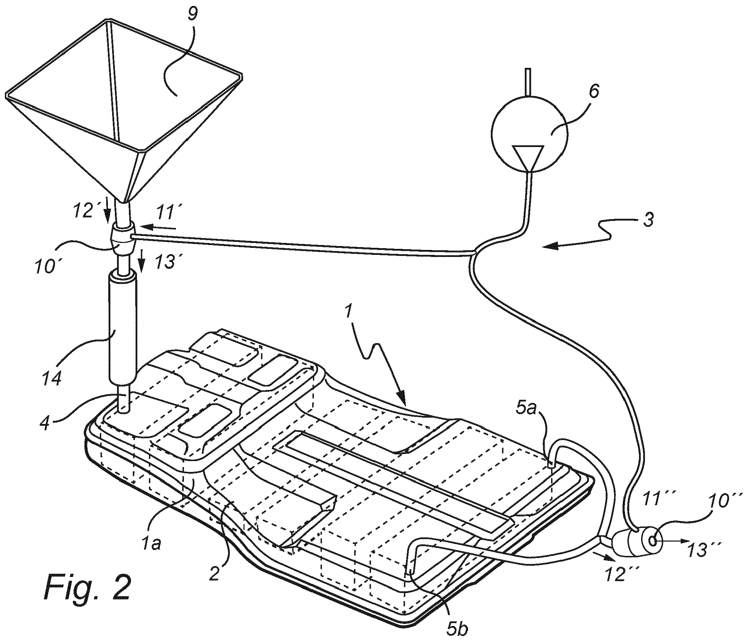

The ionizing device 14 can be tube-shaped as illustrated in fig. 2. In alternative embodiments the ionizing device 14 can be ring-shaped or take any other shape provided that any charge of static electricity on the granular insulating material 8 is effectively reduced or eliminated. For example, the ionizing device 14 can be a Simco-lon Conveyostat®, a NoStatic lonTube or a NoStatic SEC Ionizer Ring.

A means to induce vibrations 17, here a pneumatic ball vibrator, is arranged to induce vibrations in the rechargeable energy storage system 1 and help ensure a good distribution of granular insulating material 8 inside the rechargeable energy storage system 1 upon filling. The vibrations also help achieve a higher filling grade. In alternative embodiments the vibrator 17 can be a pneumatic vibrator or a ball vibrator or an electric vibrator.

The inlet opening 4 and the outlet opening 5 of the rechargeable energy storage system 1 may each comprise two or more openings fluidly connected to the same functional area of the air conveyor system 3. Fig. 2 illustrates a preferred embodiment where the outlet opening 5 of the rechargeable energy storage system 1 comprises two outlet openings 5a and 5b. Here, both outlet openings 5a and 5b functions as outlets, i.e. openings through which air and sometimes material exits the container.

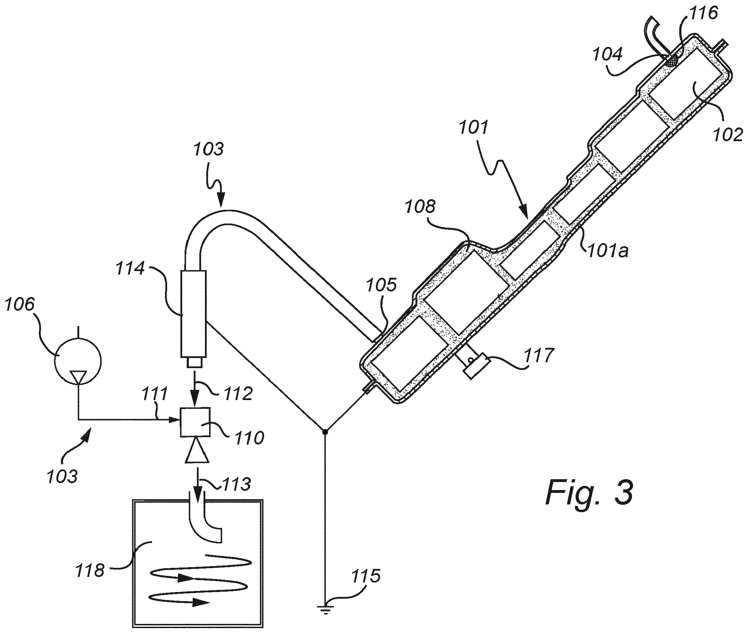

Fig. 3 is a schematic illustration of one embodiment of a system adapted to remove granular insulating material 108 from a container 101. In this example, the container is a rechargeable energy storage system 101 for an electric or a hybrid electric vehicle. The rechargeable energy storage system 101 comprises one or several battery cells 102 and the space surrounding the battery cells 102 is, initially, filled with granular insulating material 108. An air conveyor system 103 is fluidly connected to an outlet opening 105 of the rechargeable energy storage system 101. An inlet opening 104 of the rechargeable energy storage system 101 provides an air inlet. The inlet opening 104 of the rechargeable energy storage system 101 is fitted with a wire mesh suction strainer 116 or a filter, similar to the wire mesh suction strainer 16 arranged on the outlet opening 5 as shown in Fig. 2. In alternative embodiments, the inlet opening 104 of the rechargeable energy storage system 101 can be a direct opening without strainer or filter, or be fluidly connected to the air conveyor system 103. The air conveyor system 103 is fluidly connected to a means 118 for receiving the granular insulating material 108. Pressurized air is provided to the air conveyor system 103 by means of an air compressor 106.

The air conveyor system 103 is arranged such that a flow is created in the direction going, inside the rechargeable energy storage system 101, from the inlet opening 104 of the rechargeable energy storage system 101 to the outlet opening 105 of the rechargeable energy storage system 101. The flow is further directed from the outlet opening 105 of the rechargeable energy storage system 101 to the means 118 for receiving granular insulating material 108. The direction of the flow in different parts of the air conveyor system 103 is determined by the use of an ejector 110.

The ejector 110 is arranged in the air conveyor system 103 such that compressed air provided by the compressor 106 acts as a motive fluid in the ejector 110. In such a configuration, the compressor 106 is fluidly connected to the motive line 111 of the ejector 110.

An ionizing device 114 is fluidly connected to the air conveyor system 104 upstream of the means 118 for receiving granular insulation material 108. The ionizing device 114 is arranged such that the granular insulating material 108, when moving through the ionizing device 114, moves in a substantially vertical direction. The ionizing device 114 enables any charge of static electricity present on the granular insulating material 108 to be reduced or eliminated upon removal from the rechargeable energy storage system 101, prior to entering the means 118 for receiving granular insulating material 108. The ionizing device 114 and the rechargeable energy storage system 101 are both grounded 115.

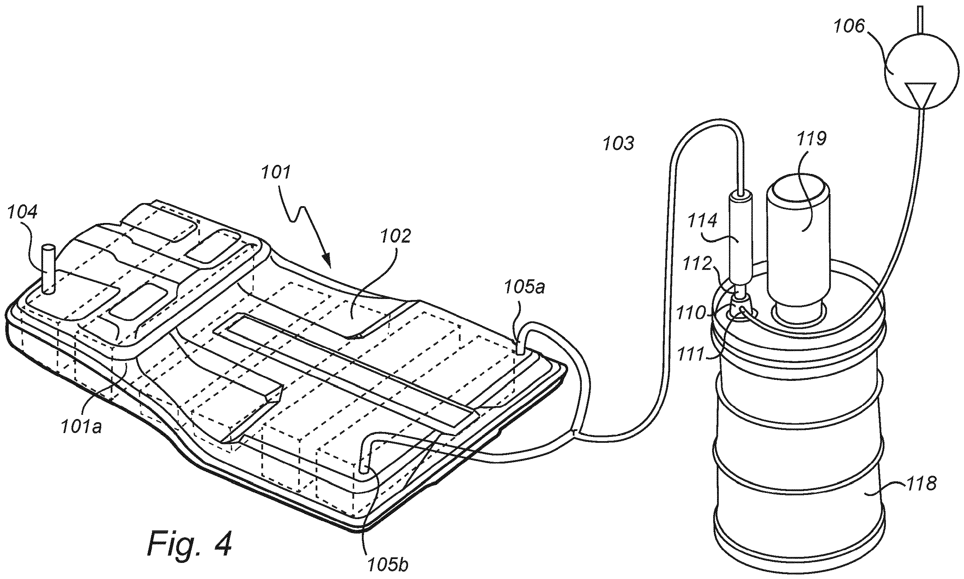

The ionizing device 114 can be tube-shaped as illustrated in fig. 4. In alternative embodiments the ionizing device 114 can be ring-shaped or take any other shape provided that any charge of static electricity on the granular insulating material 108 is effectively reduced or eliminated. For example, the ionizing device 114 can be a Simco-lon Conveyostat®, a NoStatic IonTube or a NoStatic SEC Ionizer Ring. Fig. 3. shows the ionizing device 114 arranged in the air conveyor system 103 upstream from the ejector 110, i.e. fluidly connected to the suction line 112 of the ejector 110, and fluidly connected to the outlet opening 105 of the rechargeable energy storage system 101. The means 118 for receiving granular insulating material 108 is fluidly connected to the discharge line 113 of the ejector.

In alternative embodiments, the ionizing device 114 can instead be arranged in the air conveyor system 103 downstream from the ejector 110, i.e. fluidly connected to the discharge line 113 of the ejector 110, and fluidly connected to the means 118 for receiving granular insulating material 108. The outlet opening 105 of the rechargeable energy storage system 101 is fluidly connected to the suction line 112 of the ejector 110.

The rechargeable energy storage system 101 is in Fig 3 tilted with regards to a horizontal ground surface, taking advantage of gravity to ensure a more effective emptying.

The inlet opening and the outlet opening of the rechargeable energy storage system 101 may each comprise two or more openings fluidly connected to the same functional area of the air conveyor system 103.

Fig. 4 illustrates a preferred embodiment where the rechargeable energy storage system 101 comprises two outlet openings 105a and 105b. Here, the two outlet openings 105a and 105b are arranged at two different corners of the outer casing 101a. In this preferred embodiment, the inlet opening 104 and two outlet openings 105a and 105b are arranged relative to each other in a fashion that facilitates a flow of air, and therefore a flow of insulating material 108 when the material 108 is to be removed from the container 101, throughout the whole container 101. However, the two outlet openings 105a and 105b may be arranged at any position on the outer casing 101a, depending on the flow characteristics throughout the container 101 to be achieved. Here, the air conveyor system 103 is not shown to be connected to the inlet opening 104. However, in some embodiments, the air conveyor system 103 is also connected to the inlet opening 104 when the method according to the second aspect of the present inventive concept is employed.

As illustrated in fig. 4, the means 118 for receiving granular insulating material 108 is equipped with a filter 119 for filtering exhaust air and capturing airborne particles.

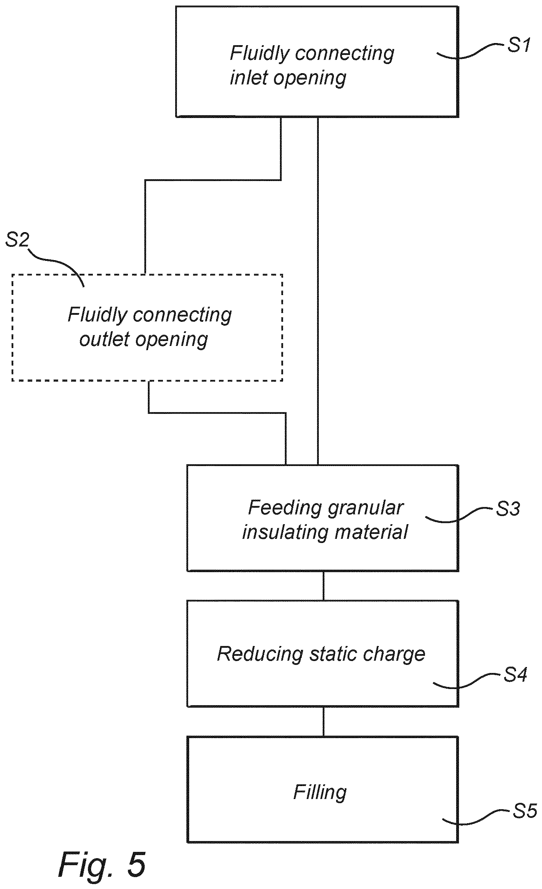

Fig. 5 is a flow diagram illustrating a method according to the first aspect of the present inventive concept. During step S1, an air conveyor system 3 is fluidly connected to an inlet opening 4 of a container 1. During the optional step S2, the air conveyor system 3 is fluidly connected to an outlet opening 5 of the container 1. The steps S1 and S2 could also be carried out simultaneously, i.e. the connection between the air conveyor system 3 and the respective opening could be established at the same time.

During step S3, granular insulating material 8 is fed to the air conveyor system 3. That the granular insulating material 8 is fed to the system 3 is to be understood as it being brought into the system 3. It is not limited to whether the insulating material 8 is moving or stationary within the system after the step S3 has been carried out. After the granular insulating material 8 has been fed to the air conveyor system 3, it is conveyed throughout the system 3 to an inlet opening 4, or any opening connected to an ionizing device 14, i.e. to an opening fluidly connected to the air conveyor system 3 where in ionizing device 14 is arranged upstream from said opening but downstream from a feeding area. Before entering the container through the inlet opening 4, the granulated insulating material 8 passes the ionizing device 14, whereby the step of reducing static charge S4 of the material 8 is carried out. Material 8 of reduced static charge is then conveyed into the container 1 during the step of filling S5. Filling the container 1 is to be understood as filling the container 1 to any degree of filling. It does not require that the container is filled to its absolute maximum capacity or that 100% of the air inside the container is replaced with insulating material. Filling the container with granular insulating material may therefore, e.g., be filling the container to at least 10%, 30% or 50% of the capacity of the container.

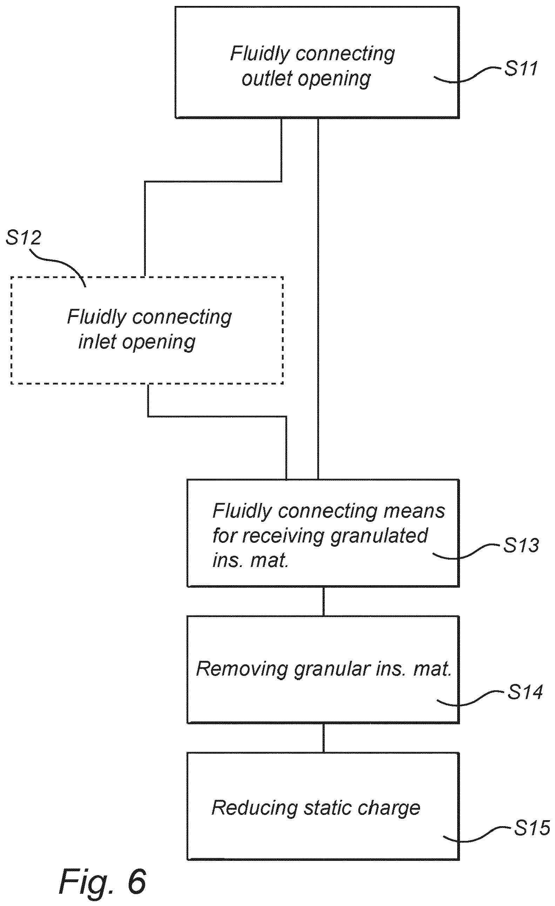

Fig. 6 is a flow diagram illustrating a method according to the second aspect of the present inventive concept. First, an air conveyor system 103 is fluidly connected S11 to an outlet opening 105 of the container 101. During the optional step S12, the air conveyor system 103 is fluidly connected to an inlet opening 104 of the container 101. The steps S1 and S2 could also be carried out simultaneously, i.e. the connection between the air conveyor system 103 and the respective opening could be established at the same time.

During step S13, a means for receiving granulated insulating material 118 is fluidly connected to the air conveyor system 103. The steps S11, S12 and S13 does not have to be performed in the order indicated in Fig. 6, but can rather be performed in any order.

During step S14, granular insulating material 108 is removed from the container 101. The removal of material 108 from the container 101 entails that the material 108 is brought from the container 101 and into the air conveyor system 103.

During step S15, the static charge of the material 108 that has been removed from the container 101 is reduced. The charge is reduced before the material 108 enters the means for receiving granulated insulating material 118 such that the material 108 will pack more easily and efficiently within said means 118.

The person skilled in the art realizes that the present inventive concept by no means is limited to the embodiments described above. The features of the described embodiments may be combined in different ways, and many modifications and variations are possible within the scope of the appended claims. In the claims, any reference signs placed between parentheses shall not be construed as limiting the claim. The word "comprising" does not exclude the presence of other elements or steps than those listed in the claim. The word "a" or "an" preceding an element does not exclude the presence of a plurality of such elements.

## Claims

1. A method for thermally insulating a container (1) with granular insulating material (8), comprising:
fluidly connecting (S1) an air conveyor system (3) to an inlet opening (4) of the container;
feeding (S3) granular insulating material (8) into the air conveyor system (3);
reducing the static charge (S4) of said granular insulating (8) material such that the granular insulating material (8), when arranged in the container (1), has reduced charge of static electricity; and
filling (S5) the container (1) with granular insulating material (8) such that the container (1) is thermally insulated.

2. The method according to claim 1, further comprising fluidly connecting (S2) the air conveyor system (3) to an outlet opening (5) of the container (1).

3. The method according to claim 1 or 2, wherein the granular insulating material (8) is selected from a group of materials comprising: Expanded Polystyrene (EPS) and Expanded Polylactic Acid (E-PLA).

4. The method according to any previous claim, further comprising: inducing vibrations in the container (1), so that the distribution of granular insulating material (8) is facilitated.

5. The method according to claim 4, wherein inducing vibrations is carried out by means of a pneumatic vibrator or a ball vibrator or an electric vibrator.

6. The method according to any preceding claim, wherein reducing the static charge (S4) of said granular insulating material (8) comprises moving said granular insulating material (8) through an ionizing device (14) fluidly connected to said air conveyor system (3) and container (1).

7. The method according to claim 6, wherein the ionizing device (14) is arranged such that the granular insulating material (8), when moving through the ionizing device (14), moves in a substantially vertical direction.

8. A method for removing granular insulating material (108) from a container (101), comprising:
fluidly connecting (S11) the air conveyor system (103) to an outlet opening (105) of the container (101);
fluidly connecting (S13) the air conveyor system (103) to a means for receiving the granular insulating material (118);
removing (S14) granular insulating material (108) from the container (101); and
reducing the static charge (S15) of said granular insulating material (108) by moving the granular insulating material (108) through an ionizing device (114) fluidly connected to said air conveyor system (103) and means for receiving the granular insulating material (118).

9. The method according to claim 8, further comprising fluidly connecting (S12) an air conveyor system (103) to an inlet opening (104) of the container (101).

10. A system adapted to fill a container with granular insulating material (8), comprising:
a container (1);
an air conveyor system (3) fluidly connected to an inlet opening (4) of the container (1);
an ionizing device (14) fluidly connected downstream from a feed system (9) of the air conveyor system (3) and fluidly connected upstream from said inlet opening (4) of the container (1).

11. The system according to claim 10, wherein said air conveyor system (3) is fluidly connected to an outlet opening (5) of the container (1), the outlet opening (5) of the container (1) being downstream from said inlet opening (4) of the container (1).

12. A rechargeable energy storage system (RESS), thermally insulated using any of the methods according to claims 1 to 6.
